# EUROPEAN PATENT APPLICATION

(11) **EP 3 846 253 A1**
(43) Date of publication of application: **07.07.2021**
(21) Application number: 19937279.8
(22) Date of filing: 09.07.2019
(51) Int. Cl.: H01M 4/139, H01M 10/0587

(54) **CATHODE SHEET AND ELECTRODE ASSEMBLY HAVING SAME**

(71) Applicant: Ningde Amperex Technology Ltd., Ningde, Fujian 350900 (CN)
(72) Inventor: CAI, Zhenghuang, Ningde, Fujian 350900 (CN); LONG, Hai, Ningde, Fujian 350900 (CN)
(74) Representative: Klunker IP Patentanwälte PartG mbB
(86) International application number: PCT/CN2019/095323
(87) International publication number: WO 2021/003679

(57) **Abstract**

A cathode plate including a first winding end and a second winding end along a length direction. The cathode plate further includes a cathode current collector and a first cathode active layer. The first cathode active layer is arranged at a surface of the cathode current collector, and the first cathode active layer includes a first end portion located at the first winding end, and the first end portion has a first cutout or a first barrier layer provided at a margin area. This application further provides an electrode assembly including the cathode plate.

## Description

### TECHNICAL FIELD

This application relates to the battery field, and in particular, to a cathode plate and an electrode assembly including the cathode plate.

### BACKGROUND

Lithium-ion batteries have advantages such as high specific energy, high working voltage, low self-discharge rate, small size, and light weight, and are widely used in the field of consumer electronics. However, with rapid development of electric vehicles and mobile electronic devices, people have growing concern and demand for battery safety.

It is well known that an anode plate usually includes a current collector ( for example, aluminum foil) and an active material layer coated on a surface of the current collector, and the active material layer is usually prepared by using a gap coating process. Due to the mutual misalignment between the current collector and the end of the active material layer, the slurry of the active material layer will shrink to form an indentation during its curing process, which results the cathode plate to generate a lithium evolution risk and the battery capacity attenuation is induced

### SUMMARY

In view of the above, it is necessary to provide a cathode plate that can avoid lithium evolution, so as to solve the above problem.

In addition, it is also necessary to provide an electrode assembly including the cathode plate.

A preferred embodiment of this application provides a cathode plate, where the cathode plate includes a first winding end and a second winding end along a length direction. The cathode plate further includes a cathode current collector and a first cathode active layer arranged on a surface of the cathode current collector. The first cathode active layer includes a first end portion located at the first winding end, and the first end portion has a first cutout or a first barrier layer provided at a margin area.

Optionally, the first cathode active layer further includes a second end portion located at the second winding end, and the second end portion has a second cutout or a second barrier layer provided at a margin area.

Optionally, the cathode plate further includes a second cathode active layer, and the cathode current collector is arranged between the first cathode active layer and the second cathode active layer. The second cathode active layer includes a third end portion located at the first winding end and a fourth end portion located at the second winding end, the third end portion has a third cutout or a third barrier layer provided at a margin area, and/or the fourth end portion has a fourth cutout or a fourth barrier layer provided at a margin area.

Optionally, one end of the cathode current collector extends beyond the first end portion and the third end portion to form a first blank area at the first winding end.

Optionally, the first end portion is misaligned with the third end portion to form a first single-sided area on the cathode current collector.

Optionally, the first end portion is flush with the third end portion to form a first double-sided area on the cathode current collector.

Optionally, the other end of the cathode current collector extends beyond the second end portion and the fourth end portion to form a second blank area at the second winding end.

Optionally, the second end portion is misaligned with the fourth end portion to form a second single-sided area on the cathode current collector, or the second end portion is flush with the fourth end portion to form a second double-sided area on the cathode current collector.

Optionally, the cathode plate further includes a plurality of tabs, the tabs are arranged at an edge of the cathode current collector, and the edge of the cathode current collector where the tabs are arranged extends beyond the first cathode active layer to form an extension portion on which an insulating layer is provided.

This application further provides an electrode assembly, the electrode assembly includes an anode plate, and further includes the foregoing cathode plate, and the electrode assembly is formed by winding the anode plate and the cathode plate. The anode plate includes an anode current collector and an anode active layer arranged on a surface of the anode current collector, and an end portion of the anode active layer includes an indentation at a margin area. The first cutout or the first barrier layer corresponds to the indentation.

In this application, by providing the first cutout or the first barrier layer at the first end portion of the first cathode active layer, even if an indentation is formed at the first end portion of the first anode active layer, the lithium evolution can be avoided at the margin area of the first end portion of the first cathode active layer, thereby increasing energy density.

### BRIEF DESCRIPTION OF DRAWINGS

FIG. 1A is a schematic structural diagram (including a top view, a main view, and a bottom view) of a cathode plate according to Example 1 of this application.
FIG. 1B is a schematic structural diagram (including a top view, a main view, and a bottom view) of an anode plate according to Example 1 of this application.
FIG. 1C is a top view of an electrode assembly formed by winding the cathode plate shown in FIG. 1 and the anode plate shown in FIG. 2.
FIG. 2A is a schematic structural diagram of a cathode plate according to Example 2 of this application.
FIG. 2B is a schematic structural diagram of an anode plate according to Example 2 of this application.
FIG. 3A is a schematic structural diagram of a cathode plate according to Example 3 of this application.
FIG. 3B is a schematic structural diagram of an anode plate according to Example 3 of this application.
FIG. 4A is a schematic structural diagram of a cathode plate according to Example 4 of this application.
FIG. 4B is a schematic structural diagram of an anode plate according to Example 4 of this application.
FIG. 5A is a schematic structural diagram of a cathode plate according to Example 5 of this application.
FIG. 5B is a schematic structural diagram of an anode plate according to Example 5 of this application.
FIG. 6A is a schematic structural diagram of a cathode plate according to Example 6 of this application.
FIG. 6B is a schematic structural diagram of an anode plate according to Example 6 of this application.

**Reference signs:**

| | |
|---|---|
| cathode current collector | 11 |
| first cathode active layer | 12 |
| second cathode active layer | 13 |
| tab | 14 |
| anode current collector | 21 |
| first anode active layer | 22 |
| second anode active layer | 23 |
| cathode plate | 100-105 |
| first winding end | 1 00 a, 200a |
| second winding end | 100b, 200b |
| extension portion | 111 |
| first insulating layer | 112 |
| first end portion | 121, 221 |
| first cutout | 122 |
| second end portion | 123, 223 |
| second cutout | 124 |
| first blank area | 12 5 |
| first single-sided area | 126 |
| first double-sided area | 127 |
| second blank area | 128 |
| second single-sided area | 129 |
| second double-sided area | 130 |
| third end portion | 131, 231 |
| third cutout | 132 |
| fourth end portion | 133, 233 |
| fourth cutout | 134 |
| anode plate | 200-205 |
| first indentation | 222 |
| second indentation | 224 |
| anode blank area | 225, 228 |
| anode double-sided area | 227 |
| anode single-sided area | 229 |
| second insulating layer | 230 |
| electrode assembly | 400 |

This application will be further described with reference to the accompanying drawings in the following specific embodiments.

### DESCRIPTION OF EMBODIMENTS

### Example 1

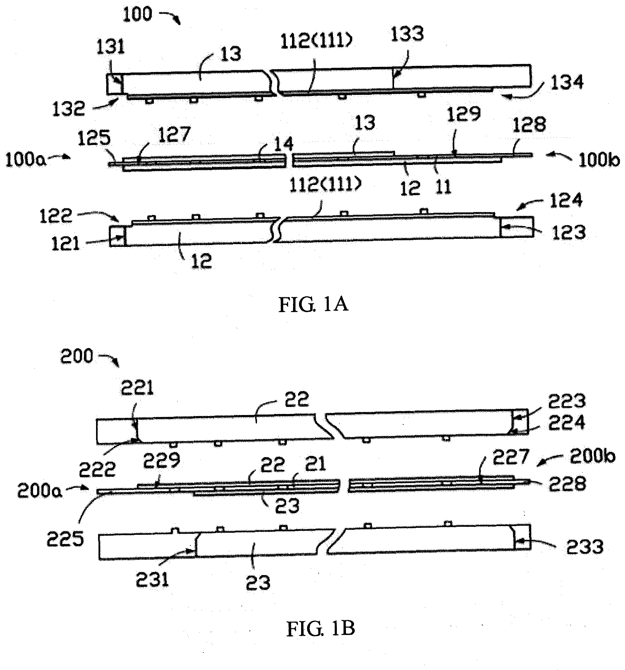

Referring to FIG. 1A, an embodiment of this application provides a cathode plate 100, where the cathode plate 100 includes a first winding end 100a and a second winding end 100b along a length direction. The cathode plate 100 further includes a cathode current collector 11 and a first cathode active layer 12, and the first cathode active layer 12 is arranged on a surface of the cathode current collector 11. The first cathode active layer 12 includes a first end portion 121 located at the first winding end 100a, and the first end portion 121 has a first cutout 122 provided at a margin area. The first cutout 122 may be triangular, square or in other shapes. For example, the first cutout 122 is substantially an isosceles right triangle with right-angle sides of less than 10 mm. For another example, a hypotenuse of the first cutout 122 can be correspondingly changed to an arc.

In another embodiment, the first cutout 122 may further be replaced by a first barrier layer (not shown) arranged at the margin area of the first end portion 121. The first barrier layer may be an adhesive layer.

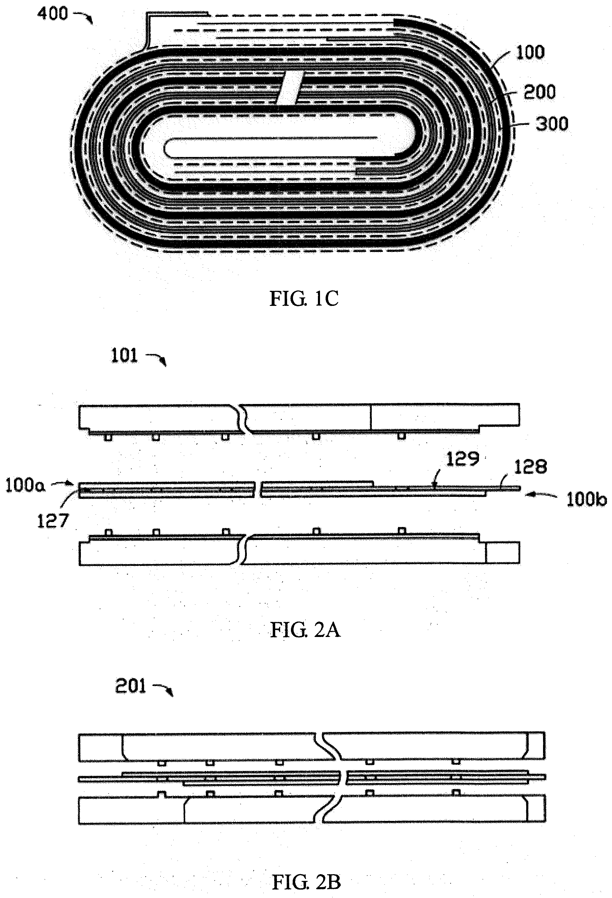

Referring to FIG. 1B and FIG. 1C together, an embodiment of this application further provides an electrode assembly 400, including an anode plate 200 and the cathode plate 100. More specifically, the electrode assembly 400 may further includes a separator 300 arranged between the anode plate 200 and the cathode plate 100. The electrode assembly 400 is formed by winding the anode plate 200, the separator 300, and the cathode plate 100. The anode plate 200 includes a first winding end 200a and a second winding end 200b along a length direction. The anode plate 200 further includes an anode current collector 21, and a first anode active layer 22 and a second anode active layer 23 that are arranged on a surface of the anode current collector 21, and the anode current collector 21 is located between the first anode active layer 22 and the second anode active layer 23. The first anode active layer 22 includes a first end portion 221 located at the first winding end 200a and a second end portion 223 located at the second winding end 200b. The second anode active layer 23 includes a third end portion 231 located at the first winding end 200a and a fourth end portion 233 located at the second winding end 200b. The first anode active layer 22 is formed on the anode current collector 21 through a gap coating process, so that the first end portion 221, the second end portion 223, the third end portion 231 and/or the fourth end portion 233 are misaligned with one end of the anode current collector 21 after cutting, so that an indentation is produced at the first end portion 221, the second end portion 223, the third end portion 231, and/or the fourth end portion 233 when the active material slurry shrinks.

In this embodiment, when the first end portion 221 of the first anode active layer 22 includes a first indentation 222 at a margin area, after the anode plate 200 and the cathode plate 100 are wound with the first winding ends 100a and 200a used as winding starting ends and the second winding ends 100b and 200b as winding ending ends, the first cathode active layer 12 corresponds to the first anode active layer 22 and the first cutout 122 or the first barrier layer corresponds to the first indentation 222.

In this way, by providing the first cutout 122 or the first barrier layer at the first end portion 121 of the first cathode active layer 12, even if a first indentation 222 is formed at the first end portion 221 of the first anode active layer 22, lithium evolution can be avoided at the margin area of the first end portion 121 of the first cathode active layer 12, thereby increasing energy density.

In this embodiment, the first cathode active layer 10 further includes a second end portion 123 located at the second winding end 100b, and the second end portion 123 has a second cutout 124 or a second barrier layer (not shown) provided at a margin area. The second cutout 124 and the second barrier layer may be triangular, square or in other shapes. The second barrier layer may be an adhesive layer.

When the second end portion 223 of the first anode active layer 22 includes a second indentation 224 at a margin area, after the anode plate 200 and the cathode plate 100 are wound, the second cutout 124 or the second barrier layer corresponds to the second indentation 224.

In this way, by providing the second cutout 124 or the second barrier layer at the second end portion 123 of the first cathode active layer 12, even if a second indentation 224 is formed at the second end portion 223 of the first anode active layer 22, the lithium evolution can be avoided at the margin area of the second end portion 123 of the first cathode active layer 12, thereby increasing energy density.

In this embodiment, the cathode plate 100 further includes a second cathode active layer 13, the cathode current collector 11 is arranged between the first cathode active layer 12 and the second cathode active layer 13, and the second cathode active layer 13 includes a third end portion 131 located at the first winding end 100a and a fourth end portion 133 located at the second winding end 100b, where the third end portion 131 has a third cutout 132 or a third barrier layer (not shown) provided at a margin area, and/or the fourth end portion 133 has a fourth cutout 134 or a fourth barrier layer (not shown) provided at a margin area. The third cutout 132 and the third barrier layer may be triangular, square or in other shapes. The third barrier layer may be an adhesive layer. In actual processing, the first cutout 122 and the third cutout 132 may be formed in one cutting step. The second cut 124 and the fourth cut 134 may be formed in one cutting step.

In this embodiment, one end of the cathode current collector 11 extends beyond the first end portion 121 and the third end portion 131 to form a first blank area 125 at the first winding end 100a. Therefore, neither sides of the cathode current collector 11 at the first winding end 100a are coated with the active material. Further, the first end portion 121 is flush with the third end portion 131 to form a first double-sided area 127 on the cathode current collector 11.

The other end of the cathode current collector 11 extends beyond the second end portion 123 and the fourth end portion 133 to form a second blank area 128 at the second winding end 100b. Further, the second end portion 123 is misaligned with the fourth end portion 133 to form a second single-sided area 129 on the cathode current collector 11.

An anode blank area 225 and an anode blank area 228 are also formed at the first winding end 200a and the second winding end 200b of the anode plate 200, respectively. The anode plate 200 is further provided with an anode single-sided area 229 and an anode double-sided area 227 in sequence adjacent to the anode blank area 225 and the anode blank area 228. After the anode plate 200 and the cathode plate 100 are wound, the anode blank area 225 of the anode plate 200 is located at the innermost circle of the electrode assembly and is opposite to the first blank area 125 of the cathode plate 100. The first double-sided area 127 and the second blank area 128 of the cathode plate 100 are located at the outermost circle of the electrode assembly, and the second blank area 128 faces toward the anode blank area 228 of the anode plate 200. The second blank area 128 and the anode blank area 228 together form an armor (MJ) structure. When the battery is abused, the second blank area 128 and the anode blank area 228 can quickly be short-circuited or in nail-through contact, thereby avoiding problems such as burning or explosion, and improving safety performance of a battery.

In this embodiment, the cathode plate 100 further includes a plurality of tabs 14 (see FIG. 1A) that are arranged at an edge of the cathode current collector 11, the edge of the cathode current collector 11 where the tabs 14 are arranged extends beyond the first cathode active layer 12 to form an extension portion 111, and the extension portion 111 is provided with a first insulating layer 112. The first insulating layer 112 is used to prevent the cathode current collector 11 from producing burrs during cutting, thereby preventing a short circuit caused by the burrs piercing through the separator 300.

### Example 2

Referring to FIG. 2A, an embodiment of the present invention further provides a cathode plate 101. Unlike the foregoing cathode plate 100, the cathode plate 101 does not have a first blank area 125 formed at the first winding end 100a, thereby reducing an amount of the first insulating layer 112 used and increasing energy density.

An embodiment of the present invention further provides an electrode assembly (not shown), and the electrode assembly is formed by winding the cathode plate 101 and an anode plate 201 (see FIG. 2B). The structure of the anode plate 201 is the same as that of the anode plate 200 in Example 1.

### Example 3

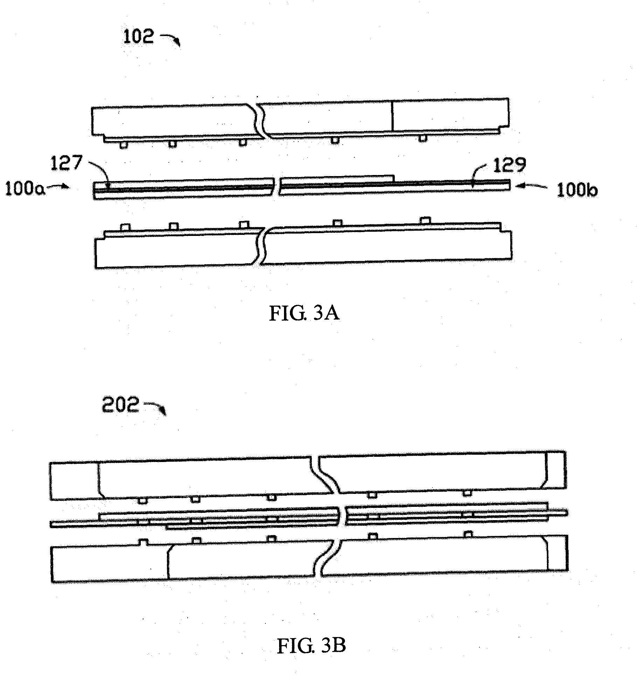

Referring to FIG. 3A, an embodiment of the present invention further provides a cathode plate 102. Unlike the foregoing cathode plate 100, the cathode plate 102 does not have a first blank area 125 formed at the first winding end 100a or a second blank area 128 formed at the second winding end 100b, thereby further reducing an amount of the first insulating layer 112 used and increasing energy density.

An embodiment of the present invention further provides an electrode assembly (not shown), and the electrode assembly is formed by winding the cathode plate 102 and an anode plate 202 (see FIG. 3B). The structure of the anode plate 202 is the same as that of the anode plate 200 in Example 1.

### Example 4

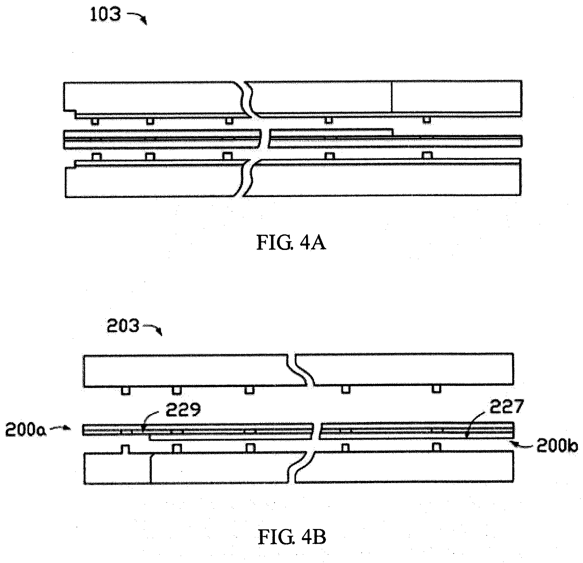

Referring to FIG. 4A, an embodiment of the present invention further provides a cathode plate 103. The structure of the cathode plate 103 is the same as that of the cathode plate 100 in Example 1.

An embodiment of the present invention further provides an electrode assembly (not shown), and the electrode assembly is formed by winding the cathode plate 103 and an anode plate 203 (see FIG. 4B). Unlike the foregoing anode plate 200, the anode plate 203 does not have an anode blank area 225 formed at the first winding end 200a or an anode blank area 228 formed at the second winding end 200b. In this way, energy density can be increased with the same active material used.

### Example 5

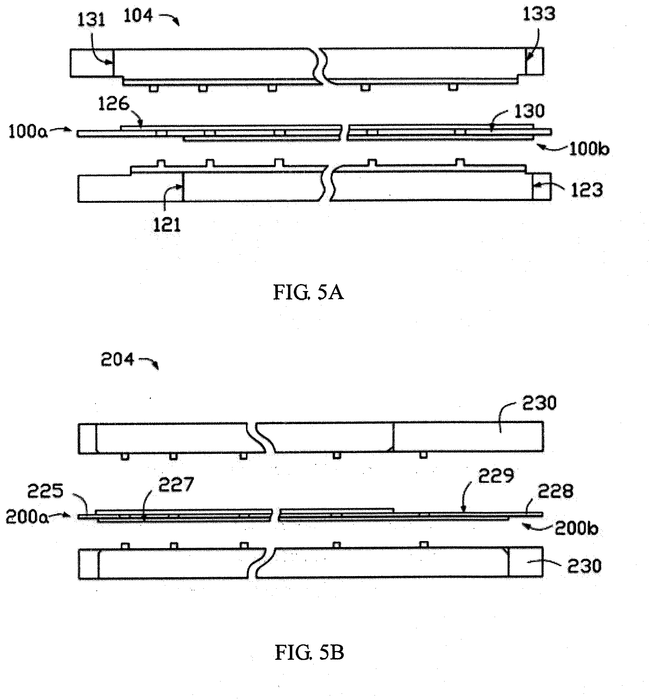

Referring to FIG. 5A, an embodiment of the present invention further provides a cathode plate 104. Unlike the foregoing cathode plate 100, in the cathode plate 104, the first end portion 121 is misaligned with the third end portion 131 to form a first single-sided area 126 at the first winding end 100a. The second end portion 123 is flush with the fourth end portion 133 to form a second double-sided area 130 at the second winding end 100b.

An embodiment of the present invention further provides an electrode assembly (not shown), and the electrode assembly is formed by winding the cathode plate 104 and an anode plate 204 (see FIG. 5B). Unlike the anode plate 200, the anode plate 204 has the anode single-sided area 229 and the anode double-sided area 227 arranged in opposite positions. To be specific, the anode single-sided area 229 and the anode double-sided area 227 are arranged adjacent to the anode blank area 228 and the anode blank area 225 respectively. In this case, the anode blank area 228 and the anode single-sided area 229 of the anode plate 204 are located at the outermost circle of the electrode assembly and the anode blank area 228 faces toward the second blank area 128 of the cathode plate 104. The first blank area 125 of the cathode plate 104 is located at the innermost circle of the electrode assembly.

In this embodiment, the anode blank area 228 and the anode single-sided area 229 of the anode plate 202 are both provided with an insulating layer 230 on the exposed surface of an anode current collector 21, and the insulating layer 230 is used to prevent short circuits due to the contact of a metal foil and an outer packaging film of a battery. The winding radius of the anode single-sided area 229 of the anode plate 202 can be increased to prevent the single-sided foil from breaking.

### Example 6

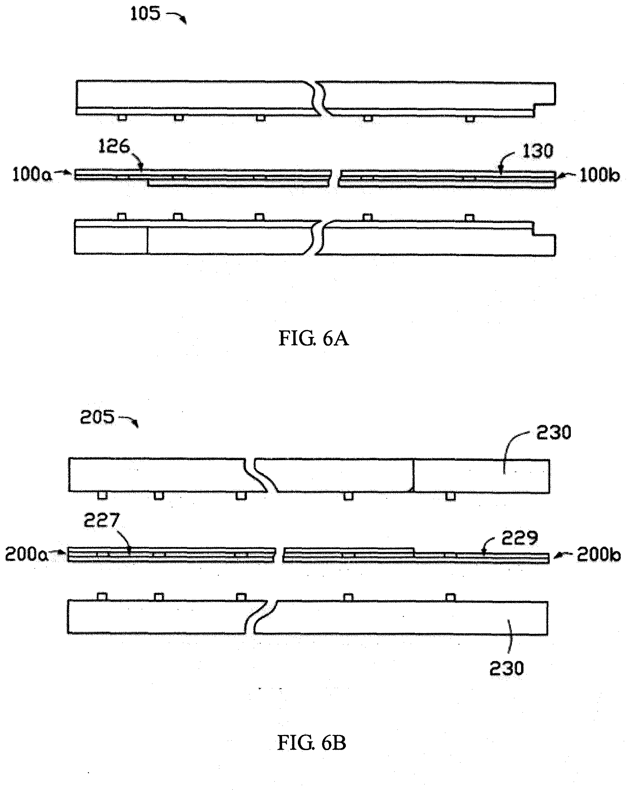

Referring to FIG. 6A, an embodiment of the present invention further provides a cathode plate 105. Unlike the cathode plate 104 in Example 5, the cathode plate 105 does not have a first blank area 125 formed at the first winding end 100a or a second blank area 128 formed at the second winding end 100b.

An embodiment of the present invention further provides an electrode assembly (not shown), and the electrode assembly is formed by winding the cathode plate 105 and an anode plate 205 (see FIG. 6B). Unlike the anode plate 204 in Example 5, the anode plate 205 does not have an anode blank area 225 formed at the first winding end 200a or an anode blank area 228 formed at the second winding end 200b.

Finally, it should be noted that the foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the spirit and essence of the technical solutions of this application.

## Claims

1. A cathode plate, comprising a first winding end and a second winding end along a length direction, **characterized in that**, the cathode plate further comprises:
a cathode current collector;
a first cathode active layer being arranged on a surface of the cathode current collector, the first cathode active layer comprises a first end portion located at the first winding end, and the first end portion has a first cutout or a first barrier layer provided at a margin area.

2. The cathode plate according to claim 1, **characterized in that**, the first cathode active layer further comprises a second end portion located at the second winding end, and the second end portion has a second cutout or a second barrier layer provided at a margin area.

3. The cathode plate according to claim 1, **characterized in that**, the cathode plate further comprises a second cathode active layer, the cathode current collector is arranged between the first cathode active layer and the second cathode active layer, and the second cathode active layer comprises a third end portion located at the first winding end and a fourth end portion located at the second winding end, the third end portion has a third cutout or a third barrier layer provided at a margin area, and/or the fourth end portion has a fourth cutout or a fourth barrier layer provided at a margin area.

4. The cathode plate according to claim 3, **characterized in that**, one end of the cathode current collector extends beyond the first end portion and the third end portion to form a first blank area at the first winding end.

5. The cathode plate according to claim 3, **characterized in that**, the first end portion is misaligned with the third end portion to form a first single-sided area on the cathode current collector.

6. The cathode plate according to claim 3, **characterized in that**, the first end portion is flush with the third end portion to form a first double-sided area on the cathode current collector.

7. The cathode plate according to claim 4, **characterized in that**, the other end of the cathode current collector extends beyond the second end portion and the fourth end portion to form a second blank area at the second winding end.

8. The cathode plate according to claim 3, **characterized in that**, the second end portion is misaligned with the fourth end portion to form a second single-sided area on the cathode current collector, or the second end portion is flush with the fourth end portion to form a second double-sided area on the cathode current collector.

9. The cathode plate according to claim 1, **characterized in that**, the cathode plate further comprises a plurality of tabs, and the plurality of tabs are arranged at an edge of the cathode current collector, and the edge of the cathode current collector where the tabs are arranged extends beyond the first cathode active layer to form an extension portion; and an insulating layer is provided on the extension portion.

10. An electrode assembly, comprising an anode plate, **characterized in that**, the electrode assembly further comprises the cathode plate according to any one of claims 1 to 9, and the electrode assembly is formed by winding the anode plate and the cathode plate;
the anode plate comprises an anode current collector and an anode active layer arranged at a surface of the anode current collector, and an end portion of the anode active layer comprises an indentation at a margin area; and
the first cutout or the first barrier layer corresponds to the indentation.
